# EUROPEAN PATENT APPLICATION

(11) **EP 1 233 361 A1**
(43) Date of publication of application: **21.08.2002**
(21) Application number: 02250964.0
(22) Date of filing: 12.02.2002
(51) Int. Cl.: G06F 17/60

(54) **System and method for managing information pertaining to new product clearance and development**

(30) Priority: 12.02.2001 US 782131
(71) Applicant: Chevron Oronite Company LLC, San Ramon, CA 94583-4289 (US)
(72) Inventor: Smrcka, Nancy K., Point Richmond, California 94801 (US); Rosales, Reynaldo H., Fairfield, California 94533 (US); Balk, Thomas J., San Francisco, California 94114 (US)
(74) Representative: O'Connell, David Christopher

(57) **Abstract**

The invention includes a method for product development including: determining customer requirements for a product; storing the requirements in a computer readable database; evaluating economics of developing the product per the customer requirements; storing the evaluation in the computer readable database; selecting a base technology; storing the selection in the computer readable database; determining modifications needed of the base technology to meet the final requirements; storing information of the determination in the computer readable database; and testing the determination to verify it meets the final requirements; and storing details and results of the testing in the computer readable database.

## Description

### I. COPYRIGHT NOTICE AND AUTHORIZATION

This patent document contains material which is subject to copyright protection.

(C) Copyright 1999-2001. Chevron Oronite Company LLC. All rights reserved.

With respect to this material which is subject to copyright protection. The owner, Chevron Oronite Company LLC, has no objection to the facsimile reproduction by any one of the patent disclosure, as it appears in the Patent and Trademark Office patent files or records of any country, but otherwise reserves all rights whatsoever.

### II. FIELD OF THE INVENTION

This invention relates to system and method for new product clearance and development, especially for new or customized chemical products.

### III. BACKGROUND OF THE INVENTION

To gain a competitive advantage, manufacturing companies continually seek to improve alignment of their goods offered for sale with the requirements of their customers. By only offering goods meeting client requirements, a manufacturing company also avoids carrying unwanted inventory.

Large manufacturing concerns selling products in different regions of the world face problems of non-uniform quality across regions. This is due to different raw materials obtained locally in each region and different understandings of the customer's requirements. A product not meeting the customer's specifications may be unsellable, thus resulting in a large financial loss. An efficient product development process is more economical and can result in better uniformity in product quality and higher customer acceptance rates.

In complex manufacturing operations,_new product development involves multiple participants, from multiple disciplines and regions. The development process can result in many reports, proposals, memos, analysis, letters, and other documents. Without an adequate system, such documents may be lost, in conflict with one another, interpreted differently by different participants, not seen by persons intended to see them, and other such problems tending to cause inefficiencies and reduce product acceptance by the customer.

Part of new product development and commercialization for products includes assuring/checking compliance with all laws and regulations of all countries where the product will be made, transported, or sold. Such laws and regulations may cover environmental, health and safety, toxicology, transportation, intellectual property and other matters. Not meeting the requirements of such laws and regulations could result in large fines.

In today's global economy, decisions must be made quickly; information must be communicated quickly and accurately across regions of the world to the right person at the right time and in the right format.

Accordingly, there is a need for a new system and method for new product clearance and development, especially for new or customized chemical products. The method and system of the invention described herein provides such a solution.

### IV. SUMMARY OF THE INVENTION

The invention includes a method for product development including: determining customer requirements for a product; storing the requirements in a computer readable database; evaluating economics of developing the product per the customer requirements; storing the evaluation in the computer readable database; selecting a base technology; storing the selection in the computer readable database; determining modifications needed of the base technology to meet the final requirements; storing information of the determination in the computer readable database; and testing the determination to verify it meets the final requirements; and storing details and results of the testing in the computer readable database.

Another embodiment of the invention includes a method of product development including: determining customer requirements for a product; storing the requirements in a computer readable database; and determining if base technology modifications are needed to meet the customer requirements.

If base technology modifications are needed to meet the customer requirements, then the method further includes: selecting a base technology; storing the selection in the computer readable database; determining modifications needed of the base technology to meet the final requirements; and storing information of the determination in the computer readable database. If the cost of the modification exceeds a predetermined amount, then the method further includes: evaluating economics of developing the product per the customer requirements; storing the evaluation in the computer readable database; qualifying the determination of modifications to verify it meets the final requirements; and storing the qualification in the computer readable database.

Another embodiment of the invention includes a product development and commercialization management information system including: a collaborative work space, where multiple participants can individually and jointly work on a project: configured at least partially automating workflow of product development and commercialization projects from determining customer requirements and financial analysis of project viability, through determining a base technology, determining any needed modifications of the base technology, and testing the modified base technology to verify compliance with customer requirements.

It is configured for adding/changing the participants in a project; configured for assigning, tracking and providing notification of tasks relating to a product development project or group of projects; configured for providing a collaborative work space including a secure/searchable communication repository linked to product development projects or logical grouping of projects and their tasks, for communications with and between project participants and customers, configured for recording, channeling, and archiving the communications.

It is also configured for financial tracking and/or forecasting for a project or a logical grouping of projects; configured for importing lab data; configured for providing a secure and searchable document repository linked to projects or logical groupings of projects, where the documents are in final format; and a database: configured for storing a product development project's history and details, the history and details including the types of data, time schedules, status of all steps in the project, contact information, results of all steps in the project, and documents and information supporting all steps in the project; and configured for searching the stored history and details and for generating reports from same; a network for connecting the collaborative workspace and database; and means for providing for different levels of secure access for different users.

Another embodiment of the invention includes a product development and commercialization management information system, the system including: means for storing, retrieving, searching, modifying, and reporting customer requirements for a product; means for storing, retrieving, searching, modifying, and reporting an evaluation of the economics of developing the product per the customer requirements; means for storing, retrieving, searching, modifying, and reporting a selection of a base technology.

It also includes means for storing, retrieving, searching, modifying, and reporting a determination of modifications needed of the base technology to meet the final requirements; and means for storing, retrieving, searching, modifying, and reporting testing details and results of the determination to verify it meets the final requirements.

These and other features and advantages of the present invention will be made more apparent through a consideration of the following detailed description of a preferred embodiment of the invention. In the course of this description, frequent reference will be made to the attached drawings.

### V. BRIEF DESCRIPTION OF THE DRAWINGS

Figs. 1-3 depict schematic diagrams of various embodiments of exemplary logical processes in the method of the invention.
Fig. 4 depicts a schematic diagram of one embodiment of a networked system for implementing the invention.

### VI. DETAILED DESCRIPTION OF PREFERRED EMBODIMENTS

The major components (also interchangeably called aspects, subsystems, modules, functions, services) of the system and method of the invention, and examples of advantages they provide, are described below with reference to the figures. For figures including process/means blocks, each block, separately or in combination, is alternatively computer implemented, computer assisted, and/or human implemented. Computer implementation optionally includes one or more conventional general purpose computers having a processor, memory, storage, input devices, output devices and/or conventional networking devices, protocols, and/or conventional client-server hardware and software. Where any block or combination of blocks is computer implemented, it is done optionally by conventional means, whereby one skilled in the art of computer implementation could utilize conventional algorithms, components, and devices to implement the requirements and design of the invention provided herein. However, the invention also includes any new, unconventional implementation means.

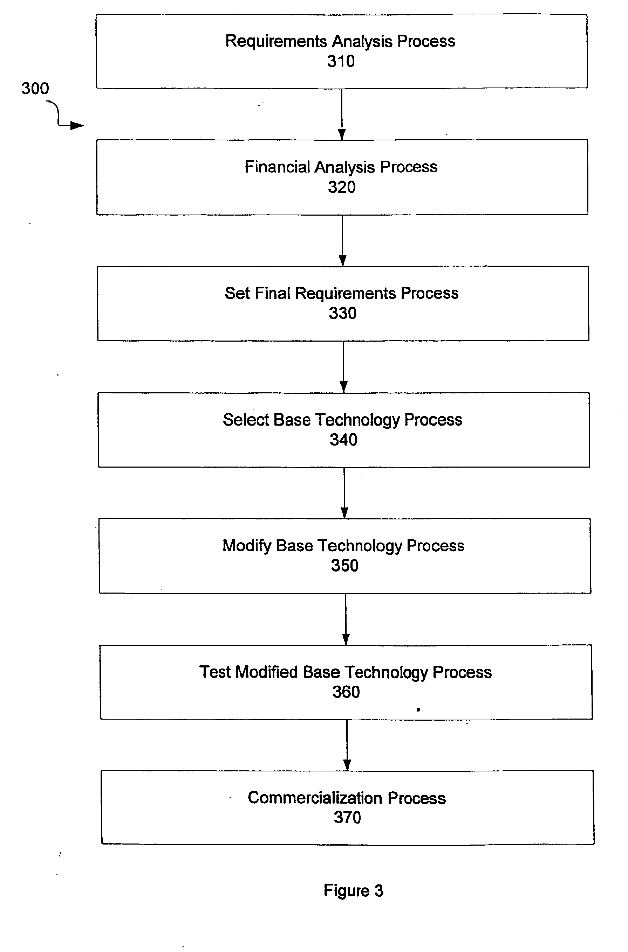

With reference to Fig. 3, the invention includes a method for product development 300. The process begins with a step 310 for initial determination of customer requirements for a product. The results of such determination are preferably stored in a computer readable database. The initial requirements are passed to Financial Analysis Process/Step 320. There the requirements are evaluated for the economics of developing the product per the customer requirements. The results of such economic analysis are optionally stored in the computer readable database.

Typically, upon a favorable economic analysis step 320, the next step is finalizing the customer's requirements, step 330. The final requirements are passed to step 340 for selecting a base technology. A base technology is the typical starting technology which either meets all or some of the customer requirements from step 330 or can be modified to meet them. In the case of a chemical product, for example, the base technology may be a chemical formula to which additional components may be added. In manufacturing a mechanical product, e.g., an automobile, the base technology may be a particular chassis frame and drive train. The results of this step are optionally stored in the computer readable database.

Once the base technology is selected in step 340, the selection is passed to the modification step 350 for determining modifications needed of the base technology to meet the final requirements. The results are optionally stored in the computer readable database. An important step for quality assurance is the next step 360 of testing the modified base technology to verify it meets the customers' final requirements and optionally storing details and results of the testing in the computer readable database.

After validating the requirements are met in step 360, the product in one embodiment is optionally commercialized in step 370. In a preferred embodiment, prior to the commercialization step is a freedom to operate step (not shown). The freedom to operate step includes one or more evaluations of the product to assure/check compliance with laws and regulations of all jurisdictions where the product will be made, transported, or sold. These laws and regulations may cover environmental, health and safety, toxicology, transportation, intellectual property and other matters. The mechanics of evaluating compliance with the various laws and regulations is known to one skilled in the art, e.g., an intellectual property attorney assures compliance with intellectual property laws, a health and safety specialist assures compliance with the related laws. Compliance with health and safety laws and regulations, e.g., may require performing certain tests on the product and providing the test results to the appropriate governmental agency in the appropriate format and/or providing a list of known risks and hazards of the product and safe handling techniques.

Commercialization includes any engineering required for setting manufacturing specifications, recording the specifications, and passing the specifications to all manufacturing locations. Regional differences are typically considered, e.g., for a chemical product, the acceptable locally obtainable versions of the ingredients are listed.

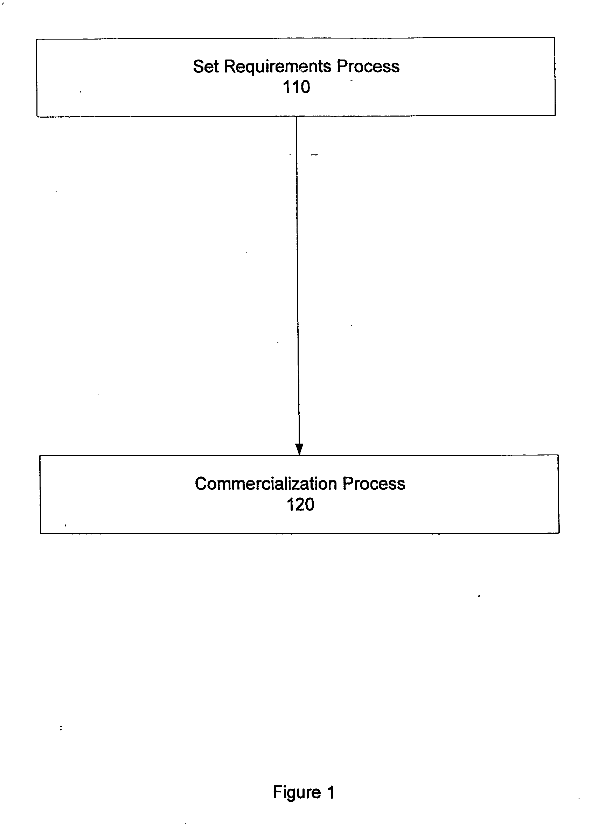

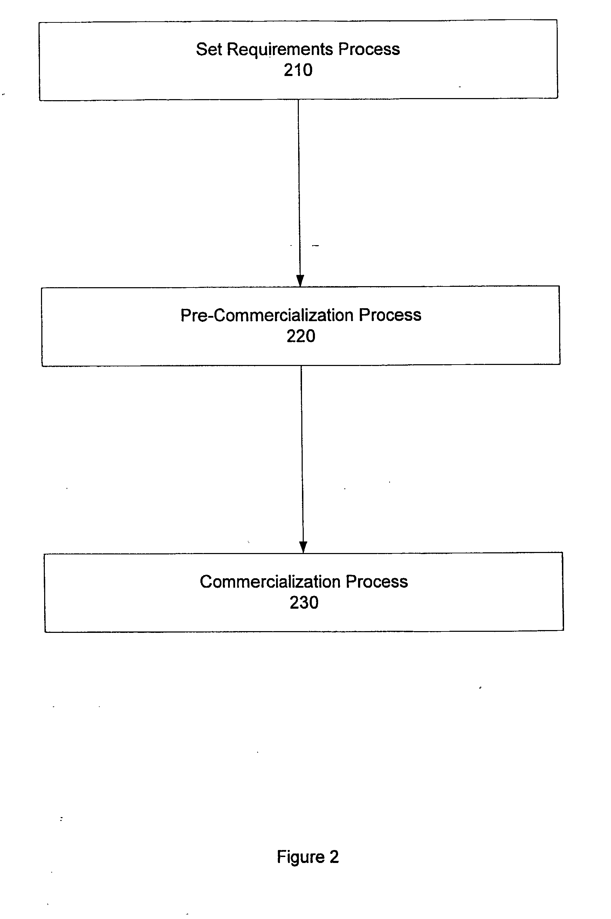

Figs. 1 and 2 are abbreviated embodiments of the method of the invention. Fig. 1, depicts a process having a Set Requirements step 110 and a Commercialization step 120. In Fig. 2, the embodiment of Fig. 1 is modified to add a pre-commercialization step 220. Pre-commercialization optionally includes one or more of the following: economic analysis, modification determination of a base technology, or testing for quality assurance. Some of the optional steps within the pre-commercialization step 220 of Fig. 2 are set out in the multiple steps in the embodiment depicted in Fig. 3. Typically, whether the embodiment of Fig. 2 or 3 is applied in a particular instance is optionally based on whether the cost of the modification to the base technology exceeds a predetermined amount. The greater the modification costs, the more justified is use of a more rigorous embodiment of the method of the invention, i.e., per Fig. 3.

Typically, the steps are performed sequentially such that a later step is not performed until all earlier steps are completed. Each above-described embodiment optionally includes recycle steps from a later step to an earlier step. For example, if testing step 360 shows the customer requirements are not met, the process could recycle back to Set Final Requirements step 330 or Select Base technology step 340.

Also, for each embodiment, after any step of the method, the step is optionally approved by authorized persons via an approval step (not show), e.g., a project manager, before proceeding to the next step. Both such sequential process flow and such approval may be required by the system or on the honor system.

Embodiments having required sequential process flow are optionally implemented by one or more steps for locking at least a portion of the steps prior to the completion of all earlier steps and unlocking the steps upon completion of all earlier steps. This thereby prevents entering a step out of order without authorization. Such steps for locking and unlocking selected portions of a database can be implemented by conventional database management system technologies. Another type of locking step optionally occurs where authorized personnel may terminate the method at any step, and the termination optionally prevents further revision of any step in the method.

A complementary aspect of another embodiment of the invention is security and version control. Such embodiments optionally include a locking step of at least a portion of the steps after their completion, thereby preventing revision of the steps without authorization. Optionally, completion of all action items is a condition precedent to performance of any final approval step.

With reference to the embodiment depicted in Fig. 3, such embodiment also optionally includes a step to maintain version control of the approved Final Requirements step 330, the approved base technology selection 340, and Modifications step 350, or the approved Qualification/Testing of Modified Base Technology step 360. Version control may be implemented by conventional database management system technologies.

Some prior known problems in new product development were due to different participants having incorrect or incomplete information and difficulty in coordinating all aspects of a project among the many participants. The method and system of the invention obviates these problems in alternate embodiments by manual and/or automated electronic mailing steps to one or more participants and/or interested persons.

Such mailing steps optionally include: a step for sending an electronic mail notification to a participant in the method or an interested person at any step in the method and a step for sending an electronic mail notification to a participant in the method or an interested person upon approval and/or completion of one of the steps of the method. The email steps also may apply to communication of information regarding action items associated with completing particular steps. Accordingly, alternate embodiments also include a step for recording in the database action items for completing one or more steps of the method, electronically notifying the responsible persons of the action items, and tracking completion of the action items.

Another alternate embodiment is where upon a termination of an instance of the method having incomplete action items, will result in exercise of a step for sending an automatic electronic mail notification of the termination and the respective incomplete action item to each respective participant responsible for each respective incomplete action item.

With the above email features, all participants are kept up to date on the status of the project, action items due, and terminations. Manual email steps described above are optionally implemented with conventional email technologies. Each automated email step described above is optionally implemented by a listener-type module which listens for pre-determined activities in the database in the database. Upon occurrence of such activities, the listener module passes an instruction to an email application to send an appropriate message. The message may be a pre-determined message or the message may include data from the database, e.g., action items, passed by text or by reference in the instructions from the listener to the email application.

Many optional features of the process allow for ease of project management and/or solve administration problems of prior known systems. In one embodiment, there is a step for plotting the actual-versus-planned progress of the steps on a timeline, for measuring and improving performance and productivity of practicing the method. Preferably, one or more of the steps is at least in part completed by selecting items from a menu, list box, drop down list, or other selection object available in a personal computer graphical user interface, thereby reducing typing time and errors.

Many features of some embodiments of the invention facilitate access by all participants and interested persons. Preferably, the storing steps store all data entered, retrieved, processed, created, stored, or modified in one or more central or distributed mutually accessible databases. Access to the database is optionally available globally from any personal computer having suitable client software installed and suitable network connectivity. Suitable client software includes, e.g., a web browser, a groupware client application, e.g., Lotus Notes ®, and suitable network connectivity includes, e.g., TCP/IP communication with the Internet.

Optionally, all participants in the method and authorized persons may access at least a portion of the database, and the graphical user interface presented matches the person's type of database access. Conventional database management system technologies may be used to provide different access levels to different persons.

Access typically includes a plurality of pre-defined views, thereby permitting quick information sorting and searching. In some embodiments, to speed data entry at least a portion of the steps include copying template forms that are stored in the database thereby insuring data consistency.

Reference forms are also preferably stored in the database and are made available to users thereby providing assistance in completing the steps.

Template and/or reference forms are revisable at any time by authorized administrators and wherein upon the revision the forms become immediately available for use by future instances of the method.

Administration of the database includes providing, changing or revoking user access, maintaining items in various selection lists, maintaining template forms, reference forms and help forms, and wherein the administration is performed only by authorized persons. In one or embodiments, a key feature of the method is that the administration is through a graphical user interface and does not require knowledge of computing languages.

Another embodiment of the invention includes a product development and commercialization management information system. Mechanism means of the system are optionally configured to perform one or more of the steps described in the method aspect of the invention described above. For each embodiment in the method aspect of the invention, there is a mechanism in the system/apparatus aspect of the invention for performing the steps therein, except for human-performed or other non-machine performed steps.

Portions of the system of the invention include a collaborative workspace, where multiple participants can individually and jointly work on a project: configured for at least partially automating workflow of new product development and commercialization. The collaborative workspace is optionally implemented with existing applications such as Lotus Notes® or other groupware-type software applications.

The collaborative workspace aspect of the invention permits access by the multiple participants and interested persons. From the collaborative workspace, or integral with it, are means/mechanisms for each step, e.g., determining customer requirements and financial analysis of project viability, through determining a base technology, determining any needed modifications of the base technology, and testing the modified base technology to verify compliance with customer requirements.

The system is configured for adding/changing the participants in a project; configured for assigning, tracking and providing notification of tasks relating to a product development project or group of projects; configured for providing a collaborative work space including a secure/searchable communication repository linked to product development with projects or logical grouping of projects and their tasks, for communications with and between project participants and customers, configured for recording, channeling, and archiving the communications.

It is also configured for financial tracking and/or forecasting for a project or a logical grouping of projects; configured for importing lab data; configured for providing a secure and searchable document repository linked to projects, i.e., instances of use of the method of the invention, or logical groupings of projects, where the documents are in final format; and a database: configured for storing a product development project's history and details, the history and details including the types of data, time schedules, status of all steps in the project, contact information, results of all steps in the project, and documents and information supporting all steps in the project; and configured for searching the stored history and details and for generating reports from same; a network for connecting the collaborative workspace and database; and means for providing for different levels of secure access for different users.

Another embodiment of the invention includes a product development and commercialization management information system. The system includes: means for storing, retrieving, searching, modifying, and reporting customer requirements for a product; means for storing, retrieving, searching, modifying, and reporting an evaluation of the economics of developing the product per the customer requirements; means for storing, retrieving, searching, modifying, and reporting a selection of a base technology.

It also includes means for storing, retrieving, searching, modifying, and reporting a determination of modifications needed of the base technology to meet the final requirements; and means for storing, retrieving, searching, modifying, and reporting testing details and results of the determination to verify it meets the final requirements. The above-referenced means are optionally implemented with conventional database management systems.

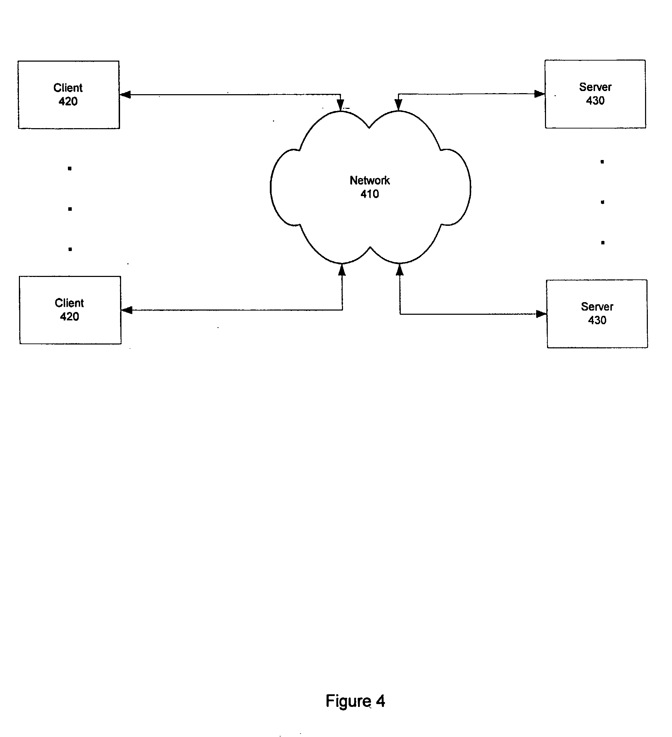

Fig. 4 depicts a schematic diagram of one embodiment of a networked system for implementing the invention. Clients 420 are connected to Server(s) 430 via Network 410. Clients 420 include the above-described client applications. One or more servers 430 are in communication with the above-described database(s) storing project data. Applications residing on the server are sufficiently configured to permit communication from the client applications with the database. These optionally include email server applications, web site server applications, and static and dynamic database management applications. Network 410 optionally includes any known networks such as LAN's, WAN's, MAN's, the Internet, EDI, private networks, and virtual private networks. It also includes any networks providing such connectivity functions developed in the future such as Internet2. Lastly, the invention is preferably configured to comply with the ISO 9000 standards promulgated by the International Organization for Standardization.

## Claims

1. A product development management information system, comprising:
(a) a collaborative workspace, wherein multiple participants can individually and jointly work on a product development project comprising a plurality of steps, the collaborative workspace being configured to:
(1) at least partially automate workflow of product development projects;
(2) assign, track and provide notification to participants of tasks relating to at least one product development project;
(3) receive input data;
(4) provide a secure, searchable communication repository for recording, channelling and archiving communications amongst participants in at least one product development project; and
(5) provide a secure, searchable repository for documents relating to at least one product development project;
(b) a database, the database being configured to:
(1) store history and details of a product development project, said history and details comprising time schedules, status and results of the steps in the project, and documents relating to steps in the project; and
(2) allow searching of the stored history and details for generating reports therefrom;
(c) a network for connecting said collaborative workspace and said database; and
(d) means for providing different levels of secure access for different users.

2. A system as claimed in claim 1, wherein said network comprises the internet.

3. The system of claim 1, wherein said collaborative workspace comprises a client application comprising a web browser.

4. The system of claim 1, comprising means for automatically sending notifications to participants.

5. The system of claim 4, comprising means for automatically sending notifications to participants based on the history and details of a product development project stored in said database.

6. The system of claim 4, comprising means for automatically sending notifications to participants, the notifications relating to the stored status and results of the steps in the project.

7. The system of claim 1, comprising means for storing a planned progress of a product development project.

8. The system of claim 7, comprising means for comparing the stored status of the steps in the project with the stored planned progress of the project.

9. The system of claim 8, comprising means for outputting a result of said comparison.

10. The system of any preceding claim, comprising means for interfacing with a chemical manufacturing system, in order to receive data therefrom.

11. The system of any preceding claim, comprising means for interfacing with a chemical manufacturing system, and means for passing process control information thereto.
